# EUROPÄISCHE PATENTANMELDUNG

(11) **EP 2 413 541 A1**
(43) Veröffentlichungstag der Anmeldung: **01.02.2012**
(21) Anmeldenummer: 10007919.3
(22) Anmeldetag: 29.07.2010
(51) Int. Cl.: H04L 12/56

(54) **Verfahren zur Kommunikation in einem Kommunikationsnetzwerk**

(71) Anmelder: SIEMENS AKTIENGESELLSCHAFT, 80333 München (DE)
(72) Erfinder: Bölderl-Ermel, Wolfgang, 90530 Wendelstein (DE)

(57) **Zusammenfassung**

Die Erfindung betrifft ein Verfahren zur Kommunikation in einem Kommunikationsnetzwerk (200),wobei die Kommunikation im Kommunikationsnetzwerk zumindest teilweise drahtlos über einen drahtlosen Kommunikationskanal erfolgt, wobei der drahtlose Kommunikationskanal eine maximale Kanalgüte aufweist, wobei das Kommunikationsnetzwerk zumindest einen Server (100; 202) und mehrere Netzwerkgeräte (206; 208; 210; 212; 214) umfasst. Das Verfahren umfasst die Anpassung (S5) einer ersten Datenrate einer Übertragung von ersten Daten und/oder einer zweiten Datenrate einer Übertragung von zweiten Daten in Abhängigkeit von der maximalen Kanalgüte und von der Art der ersten und zweiten Daten.

## Beschreibung

Die Erfindung betrifft die Kommunikation in einem Kommunikationsnetzwerk, insbesondere die zumindest teilweise drahtlose Übertragung von Daten in einem Kommunikationsnetzwerk.

Ein drahtloser Kommunikationskanal unterliegt einer großen Schwankungsbreite der Übertragungsqualität. Die Übertragungsqualität kann auch als Kanalgüte bezeichnet werden. Von der Kanalgüte hängt auch die maximal mögliche Übertragungsgeschwindigkeit des drahtlosen Kommunikationskanals ab. Die Kanalgüte nimmt ab, wenn die Distanz zwischen Sender und Empfänger größer wird oder wenn Störfaktoren größer werden. Störfaktoren können beispielsweise Hindernisse im Übertragungsweg zwischen Sender und Empfänger oder auch Interferenzen sein.

Die Schwankungsbreite der Kanalgüte ist besonders wichtig für das Mikrowellenband, wo zum Beispiel das industrielle WLAN nach dem Standard IEEE 802.11 liegt. Um so lange wie möglich eine Funkverbindung bereitzustellen, findet eine Optimierung der Datenübertragung auf den unteren Kommunikationsschichten des OSI-Schichtenmodells statt. Diese unteren Kommunikationsschichten sind beispielsweise Bitübertragungs-Schicht, die Verbindungsschicht und die Vermittlungsschicht. Solche Maßnahmen können beispielsweise Paketwiederholungen oder robustere Modulationsverfahren sein, die mit einer Reduktion der Datenrate einhergehen.

Demgegenüber liegt der Erfindung die Aufgabe zugrunde, ein verbessertes Verfahren zur Kommunikation in einem Kommunikationsnetzwerk zu schaffen. Außerdem liegt der Erfindung die Aufgabe zugrunde, einen verbesserten Server für ein solches Kommunikationsnetzwerk und ein verbessertes Computer lesbares Speichermedium für einen solchen Server zu schaffen.

Die der Erfindung zugrunde liegenden Aufgaben werden mit den unabhängigen Patentansprüchen gelöst. Ausführungsformen der Erfindung sind in den abhängigen Patentansprüchen gegeben.

Erfindungsgemäß wird ein Verfahren zur Kommunikation in einem Kommunikationsnetzwerk geschaffen. Die Kommunikation im Kommunikationsnetzwerk erfolgt zumindest teilweise drahtlos über einen drahtlosen Kommunikationskanal. Der drahtlose Kommunikationskanal weist eine maximale Kanalgüte auf. Die maximale Kanalgüte entspricht einer maximal möglichen Datenübertragungsgeschwindigkeit oder auch Datenrate. Mit der maximalen Kanalgüte ist hier auch eine Kanalgüte gemeint, die eine drahtlose Kommunikation über den Kommunikationskanal mit Beeinträchtigungen, die die Datenrate vermindern könnten, erfolgt. Die maximale Kanalgüte ist ein Indikator dafür, wie hoch die Datenrate der über den drahtlosen Kommunikationskanal übertragenen Daten maximal sein kann.

Das Kommunikationsnetzwerk umfasst zumindest einen Server und mehrere Netzwerkgeräte. Ein Netzwerkgerät kann dabei beispielsweise ein PC, ein Laptop, ein Mobiltelefon, ein PDA oder eine Automatisierungseinrichtung sein. Falls eine Automatisierungseinrichtung Bestandteil des Kommunikationsnetzwerks ist, handelt es sich um ein Automatisierungsnetzwerk.

Ein Automatisierungsnetzwerk kann z.B. als industrielles Automatisierungsnetzwerk ausgebildet sein. Solche industriellen Automatisierungsnetzwerke können z.B. zur Steuerung und/oder Regelung von industriellen Anlagen (z.B. Produktionsanlagen, Förderanlagen usw.), Maschinen und/oder Geräten ausgebildet, eingerichtet und/oder vorgesehen sein. Insbesondere können Automatisierungsnetzwerke bzw. industrielle Automatisierungsnetzwerke Echzeit-Kommunikationsprotokolle (z.B. Profinet, Profibus, Real-Time-Ethernet)zur Kommunikation zumindest zwischen den an den Steuerungs- und/oder Regelungsaufgaben beteiligten Komponenten (z.B. zwischen den Steuerungseinheiten und den zu steuernden Anlagen und/oder Maschinen) aufweisen. Die sichere Übertragung von Daten über Speichermedien ist ebenfalls abgedeckt.

Weiterhin kann neben einem Echtzeit-Kommunikationsprotokoll aber auch noch mindestens ein weiteres Kommunikationsprotokoll (das z.B. nicht echtzeitfähig zu sein braucht) in dem Automatisierungsnetzwerk bzw. industriellen Automatisierungsnetzwerk vorgesehen sein, z.B. zum Überwachen, Einrichten, Umprogrammieren oder/oder Umparametrieren einer oder mehrerer Steuerungseinheiten im Automatisierungsnetzwerk.

Ein Automatisierungsnetzwerk kann z.B. drahtgebundene Kommunikationskomponenten und/oder drahtlose Kommunikationskomponenten umfassen. Außerdem kann ein Automatisierungsnetzwerk zumindest eine Automatisierungseinrichtung umfassen.

Eine Automatisierungseinrichtung kann beispielsweise ein Computer, PC und/oder Controller mit Steuerungs-Aufgaben bzw. Steuerungs-Fähigkeiten sein. Insbesondere kann eine Automatisierungseinrichtung beispielsweise eine industrielle Automatisierungseinrichtung sein, die z.B. speziell zur Steuerung und/oder Regelung industrieller Anlagen ausgebildet, eingerichtet und/oder vorgesehen sein kann. Insbesondere können solche Automatisierungseinrichtungen bzw. industriellen Automatisierungseinrichtungen echtzeitfähig sein, d.h. eine Steuerung bzw. Regelung in Echtzeit ermöglichen. Dazu kann die Automatisierungseinrichtung bzw. die industrielle Automatisierungseinrichtung z.B. ein Echtzeitbetriebssystem umfassen und/oder zumindest unter a130 nderem ein echtzeitfähiges Kommunikationsprotokoll zur Kommunikation (z.B. Profinet, Profibus, Real-Time-Ethernet) unterstützen.

Ein Automatisierungsnetzwerk umfasst mehrere Sensoren und Aktuatoren. Die Aktuatoren und Sensoren werden von zumindest einer Steuerungseinrichtung gesteuert. Die Aktuatoren, die Sensoren und die zumindest eine Steuerungseinrichtung tauschen Daten miteinander aus. Zum Datenaustausch wird ein Automatisierungsprotokoll verwendet. Die zumindest eine Steuerungseinrichtung steuert die Aktuatoren, die Sensoren und den Datenaustausch so, dass ein maschineller Fertigungsprozess abläuft, in dem z.B. ein Produkt hergestellt wird.

Eine industrielle Automatisierungseinrichtung kann z.B. eine speicherprogrammierbare Steuerung, ein Modul oder Teil einer speicherprogrammierbaren Steuerung, eine in einem Computer oder PC integrierte speicherprogrammierbare Steuerung sowie entsprechende Feldgeräte, Sensoren und/oder Aktoren, Ein-und/oder Ausgabegeräte oder Ähnliches zum Anschluss an einer speicherprogrammierbare Steuerung sein oder solche umfassen.

Als Automatisierungsprotokoll im Sinne der vorliegenden Erfindung wird jede Art von Protokoll verstanden, das zur Kommunikation mit Automatisierungs-Einrichtungen gemäß der vorliegenden Beschreibung vorgesehen, geeignet und/oder eingerichtet ist. Solche Automatisierungsprotokolle können beispielsweise das Profibus-Protokoll (z. B. gemäß IEC 61158/EN50170), ein Profi-Bus-DP-Protokoll, ein Profi-Bus-PA-Protokoll, ein Profinet-Protokoll, ein Profi-Net-IO-Protokoll, ein Protokoll gemäß AS-Interface, ein Protokoll gemäß IO-Link, ein KNX-Protokoll, ein Protokoll gemäß einer Mehrpunkt-Schnittstelle (Multipoint-Interface, MPI), ein Protokoll für eine Punkt-zu-Punkt-Kopplung (Point-to-Point, PtP), ein Protokoll gemäß den Spezifikationen der S7-Kommunikation (welches beispielsweise zur Kommunikation von speicherprogrammierbaren Steuerungen der Firma Siemens vorgesehen und eingerichtet ist) oder auch ein Industrial-Ethernet-Protokoll oder Real-Time-Ethernt-Protokoll bzw. weitere spezifische Protokolle für die Kommunikation mit Automatisierungsgeräten sein. Als Automatisierungsprotokoll im Sinne der vorliegenden Beschreibung können auch beliebige Kombinationen der vorgenannten Protokolle vorgesehen sein.

Auf dem Server und den Netzwerkgeräten werden mehrere Anwendungen ausgeführt. Eine Anwendung kann beispielsweise ein Browser oder Download-Programm sein, worüber ein PC oder ein Laptop eine Datei aus dem Internet herunterlädt. Videoanwendungen können beispielsweise Videodaten mit einer ersten und einer zweiten Datenrate übertragen. Hierbei ist es zum Beispiel vorteilhaft, wenn die Videodaten mit einer geringeren zweiten Datenrate übertragen werden, anstelle von einer ruckelnden Übertragung in einer höheren ersten Datenrate. Ferner können Anwendungen Automatisierungs-Anwendungen, wie z.B. PROFINET-Anwendungen, sein. Solche Anwendungen dienen dem Austausch von Automatisierungsdaten in dem Kommunikationsnetzwerk. Auch diese Daten können beispielsweise mit einer ersten, höheren und einer zweiten, niedrigeren Datenrate übertragen werden. Die Übertragung mit der zweiten, niedrigeren Datenrate ist vorteilhaft, wenn die Kanalgüte des drahtlosen Kommunikationskanals nicht für die erste Datenrate ausreichend ist. Auch sicherheitsgerichtete Daten, wie zum Beispiel Fail-Safe-Daten, können übertragen werden. Hierfür werden sicherheitsgerichtete Anwendungen auf dem Server und/oder den Netzwerkgeräten ausgeführt.

Es werden also Anwendungsdaten über das Kommunikationsnetzwerk zwischen dem Server und den Netzwerkgeräten und/oder zwischen den Netzwerkgeräten untereinander übertragen. Die Anwendungsdaten umfassen zumindest erste Daten einer ersten Anwendung und zweite Daten einer zweiten Anwendung. Für die Übertragung der ersten Daten über den drahtlosen Kommunikationskanal wird eine erste Datenrate und für die Übertragung der zweiten Daten über den drahtlosen Kommunikationskanal wird eine zweite Datenrate verwendet.

Die maximale Kanalgüte des drahtlosen Kommunikationskanals kann insbesondere mit Hilfe von Kanalqualitäts-Kenngrößen ermittelt werden. Kanalqualitäts-Kenngrößen können beispielsweise auftretende CRC-Fehler, Frame-Wiederholungen, verwendete Modulationsarten und/oder Datenraten sein. Wenn beispielsweise die CRC-Fehlerrate hoch ist, ist die Kanalgüte dementsprechend niedrig; bei der Anzahl der Frame-Wiederholung verhält es sich genauso. Wenn beispielsweise die Anzahl der CRC-Fehler steigt, sinkt die maximale Kanalgüte. Wenn die Anzahl der Frame-Wiederholungen steigt, sinkt ebenfalls die maximale Kanalgüte. Wenn eine Anwendung die Modulationsart zu einer robusteren Modulationsart wechselt, kann ebenfalls auf eine geringere Kanalgüte geschlossen werden. Bei einer Verringerung der Datenrate gilt dies ebenso. Auf eine Erhöhung der maximalen Kanalgüte weist eine Verringerung der CRC-Fehler, eine Verringerung der Frame-Wiederholungen, eine Steigerung der Datenraten und/oder der Wechsel zu einer schnelleren, aber nicht so robusten Modulationsart hin.

Zusätzlich oder alternativ kann die maximale Kanalgüte von einem weiteren Gerät im Kommunikationsnetzwerk ermittelt werden. In diesem Fall übermittelt das weitere Gerät ein Signal zum Server. Das Signal ist dabei ein Indikator für die maximale Kanalgüte.

Die Art der ersten und zweiten Daten kann insbesondere mit Hilfe von Anwendungs-Kenngrößen der ersten und zweiten Anwendungen ermittelt werden. Anwendungs-Kenngrößen können beispielsweise die Art der Anwendung beschreiben. Wenn es sich beispielsweise um eine Videoanwendung handelt, besagen die Anwendungs-Kenngrößen, dass die entsprechende Daten Videodaten sind. Entsprechendes gilt für ein Downloadprogramm oder einen Internetbrowser, der üblicherweise Dateien aus dem Internet herunterlädt. Die Anwendungs-Kenngrößen für eine Automatisierungsanwendung besagen, dass es sich bei den Anwendungsdaten um Automatisierungsdaten handelt. Sicherheitsgerichtete Anwendungen übertragen üblicherweise sicherheitsgerichtete Daten.

Zusätzlich oder alternativ können die Art der ersten und zweiten Daten der ersten und zweiten Anwendung bei Einrichtung des Kommunikationsnetzwerks fest zugewiesen werden. Dies kann beispielsweise durch eine Parametrisierung oder durch Standardeinstellungen der Anwendungen erfolgen.

Wenn nun die maximale Kanalgüte schwankt, werden die erste und/oder die zweite Datenrate in Abhängigkeit von der maximalen Kanalgüte und von der Art der ersten und zweiten Daten angepasst. Eine Schwankung der Kanalgüte kann beispielsweise dadurch registriert werden, dass die Anzahl der CRC-Fehler oder der Frame-Wiederholungen sich ändert. Im Allgemeinen kann jede Schwankung einer Kanalqualitäts-Kenngröße auf eine Schwankung der maximalen Kanalgüte hindeuten.

Die Art der Daten wird berücksichtigt, weil es vorteilhaft sein kann, sicherheitsgerichtete Daten nicht in ihrer Datenrate im Modulationsverfahren einzuschränken. Es kann hingegen ohne Beeinträchtigung für die Sicherheit und mit hinnehmbarer Beeinträchtigung für den Anwender vorteilhaft sein, wenn beispielsweise ein Download aus dem Internet mit einer niedrigeren Datenrate abläuft. Ebenfalls kann es in einem solchen Fall vorteilhaft sein, dass die Videodaten mit einer geringeren Datenrate übertragen werden. Dies ist für einen Benutzer meistens angenehmer als eine ruckelnde Übertragung mit einer höheren Datenrate.

Sicherheitsgerichtete Daten können beispielsweise Daten sein, die für die Sicherheit des Automatisierungssystems wichtig sind. Zum Beispiel können dies Failsafe-Signale sein. Dies können Signale sein, die regelmäßig von einem Netzwerkgerät an den Server gesendet werden, um zu signalisieren, dass das Netzwerkgerät regulär funktioniert. Auch Videodaten können sicherheitsgerichtet sein, wenn sie zum Beispiel zur Überwachung von Automatisierungseinrichtungen dienen.

Alternativ oder zusätzlich kann die erste und/oder die zweite Anwendung auch in Abhängigkeit von der maximalen Kanalgüte und von der Art der ersten und zweiten Daten beendet werden. Eine Beendigung der ersten Anwendung ist beispielsweise dann vorteilhaft, wenn für die zweiten Daten eine so hohe Datenrate benötigt wird, dass jegliche Übertragung der ersten Daten die Übertragung der zweiten Daten in einem Maß stört, das zum Beispiel die Sicherheit eines Automatisierungssystems beeinträchtigen könnte. Das gleiche gilt für eine Beendigung der zweiten Anwendung, wenn für die ersten Daten eine solch hohe Datenrate benötigt wird.

Ein solches Verfahren kann auch bei der Planung des Kommunikationsnetzwerks bereits durchgeführt werden. Hierfür definiert beispielsweise ein Benutzer, welche Daten er durch welche Anwendungen mit welcher Datenrate übertragen will. Durch eine Rückmeldung eines Programms, was ein Planungsverfahren nach Ausführungsformen der Erfindung ausführt, wird dem Benutzer dargestellt, die maximale Kanalgüte des drahtlosen Kommunikationskanals für die von ihm ausgewählten Anwendungen und Datenraten ausreicht. Hierfür wird das Verfahren nach Ausführungsformen der Erfindung so abgewandelt, dass keine tatsächliche Kommunikation in dem Kommunikationsnetzwerk stattfindet. Anstatt dessen wird Kommunikation lediglich an einem PC simuliert, wodurch eventuelle Überlastungen des drahtlosen Kommunikationskanals dem Benutzer dargestellt werden können. Der Benutzer kann dann auf einzelne Anwendungen verzichten oder die Datenraten einzelner Anwendungen reduzieren, bis ihm dargestellt wird, dass die maximale Kanalgüte des drahtlosen Kommunikationskanals für die von ihm ausgewählten Anwendungen und Datenraten ausreichend ist.

Nach Ausführungsformen der Erfindung handelt es sich bei den ersten und/oder zweiten Daten um eine der folgenden Datenarten: Echtzeitdaten, Programminstallationsdaten, Dokumentdaten, Videodaten, Sprachdaten und/oder sicherheitsgerichtete Daten.

Nach Ausführungsformen der Erfindung sind die ersten Daten Echtzeitdaten mit einer ersten Datenrate. Bei einer Beendigung der ersten Anwendung wird eine dritte Anwendung gestartet. Die dritte Anwendung überträgt dritte Daten über den drahtlosen Kommunikationskanal und die dritten Daten sind Echtzeitdaten mit einer zweiten Datenrate. Es wird in diesem Fall also nicht die Datenrate der ersten Anwendung gedrosselt, sondern eine weitere Anwendung mit einer anderen Datenrate gestartet. Dies kann beispielsweise vorteilhaft sein, wenn Videodaten einer ersten Anwendung übertragen werden und eine Änderung der Modulationsart und/oder der Datenrate der Videodaten nicht möglich ist. Die dritte Anwendung überträgt dann die gleichen Videodaten mit einer geringeren Datenrate und/oder mit einer anderen Modulationsart.

Nach Ausführungsformen der Erfindung sind die zweiten Daten sicherheitsgerichtete Daten. Die Übertragung der zweiten Daten benötigt eine Mindestdatenrate. Der Server verhindert, dass die zweite Datenrate kleiner als die Mindestdatenrate wird. Hierfür kann beispielsweise bei einer Reduzierung der maximalen Kanalgüte die erste Anwendung beendet oder die Datenrate der ersten Anwendung verringert werden.

Nach Ausführungsformen der Erfindung umfassen die Kanalqualitäts-Kenngrößen zumindest eine der folgenden Größen: Anzahl von CRC-Fehlern, Anzahl von Frame-Wiederholungen, Modulationsart, Datenrate.

Es kann beispielsweise die Datenrate einer ersten Anwendung verringert werden, wenn die Anzahl der CRC-Fehler oder Frame-Wiederholungen über einen bestimmten Schwellwert steigt. Alternativ kann in diesem Fall auch eine erste Anwendung beendet werden.

Nach Ausführungsformen der Erfindung umfasst der Server Anzeigemittel. Über die Anzeigemittel gibt der Server einen Indikator für die Ausnutzung der maximalen Kanalgüte des drahtlosen Kommunikationskanals aus. Dies ist vorteilhaft, damit beispielsweise ein Benutzer bei Ausnutzung der maximalen Kanalgüte gewarnt wird und gegebenenfalls selbst entscheiden kann, welche Datenrate wie gemindert oder welche Anwendung beendet werden soll.

Nach Ausführungsformen der Erfindung wird der Indikator in Abhängigkeit von der Ausnutzung der maximalen Kanalgüte in unterschiedlichen Farben dargestellt. Beispielsweise ist der Indikator grün, wenn die Ausnutzung der maximalen Kanalgüte unterhalb von 50% liegt. Oberhalb von 50% wechselt er die Farbe hin zu gelb und je näher er der 100%-Ausnutzung kommt, desto rötlicher wird der Indikator. Andere Prozentstufen sind ebenfalls denkbar. Es ist denkbar, dass der Indikator die Farbe fließend wechselt oder seine Farbe stufenförmig von grün über gelb über orange zu rot wechselt.

In einem weiteren Aspekt betrifft die Erfindung einen Server für ein Kommunikationsnetzwerk. Der Server ist dazu ausgebildet, mehrere Anwendungen zu priorisieren. Hierzu umfasst der Server Mittel für die Priorisierung von Anwendungsdaten über das Kommunikationsnetzwerk. Priorisierung bedeutet hier, dass bestimmten Anwendungsdaten eine höhere Priorität als anderen Anwendungsdaten zugesprochen wird. Beispielsweise werden sicherheitsgerichteten Anwendungsdaten die höchste Priorität zugesprochen und beispielsweise Downloaddaten eine niedrigere Priorität. Die Anwendungsdaten umfassen zumindest erste Daten einer ersten Anwendung und zweite Daten einer zweiten Anwendung. Die ersten Daten können also anders priorisiert sein als die zweiten Daten.

Ferner umfasst der Server Mittel zur Bestimmung einer ersten Datenrate für die Übertragung der ersten Daten über einen drahtlosen Kommunikationskanal und zur Bestimmung einer zweiten Datenrate für die Übertragung der zweiten Daten über den drahtlosen Kommunikationskanal. Außerdem umfasst der Server Mittel zur Ermittlung der maximalen Kanalgüte des drahtlosen Kommunikationskanals insbesondere auf der Grundlage von Kanalqualitäts-Kenngrößen. Die Bestimmung der ersten und der zweiten Datenrate kann zum Beispiel durch einen Prozessor erfolgen. Der Prozessor kann ebenfalls zur Ermittlung der maximalen Kanalgüte ausgebildet sein.

Der Server umfasst Mittel zur Ermittlung der Art der ersten und der zweiten Daten insbesondere auf Grundlage von Anwendungs-Kenngrößen der ersten und der zweiten Anwendung. Außerdem umfasst der Server Mittel zur Anpassung der ersten und/oder der zweiten Datenrate in Abhängigkeit von der maximalen Kanalgüte und von der Art der ersten und zweiten Daten. Der Server umfasst Mittel zur Beendigung der ersten und/oder der zweiten Anwendung in Abhängigkeit von der maximalen Kanalgüte und von der Art der ersten und der zweiten Daten.

In noch einem weiteren Aspekt betrifft die Erfindung ein computerlesbares Speichermedium mit Instruktionen, ihrer Ausführungen in einem Server nach Ausführungsformen der Erfindung den Server zur Ausführung der folgenden Schritte veranlassen. Zunächst werden Anwendungsdaten für die Ausführung der Anwendungen über das Kommunikationsnetzwerk übertragen. Die Anwendungsdaten umfassen zumindest erste Daten einer ersten Anwendung und zweite Daten einer zweiten Anwendung. Eine erste Datenrate für die Übertragung der ersten Daten über einen drahtlosen Kommunikationskanal und eine zweite Datenrate für die Übertragung der zweiten Daten über den drahtlosen Kommunikationskanal werden bestimmt. Die maximale Kanalgüte des drahtlosen Kommunikationskanals wird insbesondere auf Grundlage der Kanalqualitäts-Kenngrößen ermittelt. Außerdem wird die Art der ersten und der zweiten Daten insbesondere auf der Grundlage von Anwendungs-Kenngrößen der ersten und der zweiten Anwendung ermittelt.

Vorzugsweise werden die Instruktionen durch einen Prozessor ausgeführt. Der Prozessor kann auch die einzelnen Schritte durchführen.

Die erste und/oder die zweite Datenrate werden in Abhängigkeit von der maximalen Kanalgüte und von der Art der ersten und zweiten Daten angepasst. Zusätzlich oder alternativ wird die erste Anwendung und/oder die zweite Anwendung in Abhängigkeit von der maximalen Kanalgüte und von der Art der ersten und zweiten Daten beendet.

In noch einem weiteren Aspekt betrifft die Erfindung ein Kommunikationsnetzwerk mit einem Server nach Ausführungsformen der Erfindung.

Im Weiteren werden Ausführungsformen der Erfindung mit Bezugnahme auf die Zeichnungen näher erläutert. Es zeigen:
- Figur 1: eine schematische Darstellung der Anwendungsarten, der Kanalqualitäts-Kenngrößen und Einstellungsgrößen bei Einrichtung des Servers;
- Figur 2: eine schematische Darstellung eines Kommunikationsnetzwerks mit mehreren Netzwerkgeräten und einem Server;
- Figur 3: ein Flussdiagramm eines Verfahrens nach Ausführungsformen der Erfindung; und
- Figur 4: ein Blockdiagramm eines Servers nach Ausführungsformen der Erfindung.

Elemente der nachfolgenden Figuren, die einander entsprechen, sind mit denselben Bezugszeichen gekennzeichnet.

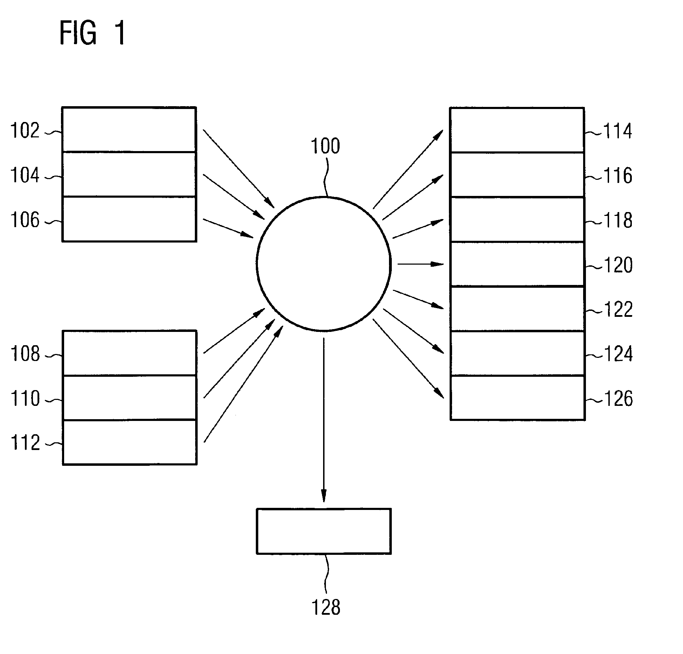

Figur 1 ist eine schematische Darstellung von Anwendungs-Kenndaten, Kanalqualitäts-Kenngrößen und Eingabegrößen, die bei Einrichtung eines Kommunikationsnetzwerks an einem Server 100 eingegeben werden können. Der Server 100 befindet sich im Kommunikationsnetzwerk (nicht dargestellt) und kontrolliert und priorisiert Anwendungsdaten, die im Kommunikationsnetzwerk zwischen Netzwerkgeräten des Kommunikationsnetzwerks ausgetauscht werden.

Zur Kontrolle und Priorisierung der Anwendungsdaten ermittelt der Server 100 eine maximale Kanalgüte eines drahtlosen Kommunikationskanals des Kommunikationsnetzwerks. Die maximale Kanalgüte entspricht einer maximal möglichen Datenrate für die Übertragung der Anwendungsdaten über den drahtlosen Kommunikationskanal.

Zur Ermittlung der maximalen Kanalgüte registriert der Server 100 die Anzahl CRC-Fehlern 102 (Cyclic Redundancy Check), die Anzahl der Frame-Wiederholungen 104 und die Modulationsart und die Datenrate 106 von ersten und zweiten über den drahtlosen Kommunikationskanal (nicht dargestellt) übertragenen Daten als Kanalqualitäts-Kenngrößen.

Bei der Planung des Kommunikationsnetzwerks wurde festgelegt, welche Anwendungsarten eine bestimmte Priorisierung erhalten sollen. Beispielsweise können Automatisierungsdaten 108, die zum Beispiel mit dem PROFInet-Protokoll übertragen werden, eine relativ hohe Priorisierung haben, während Downloaddaten 110 niedriger priorisiert sind. Eine noch niedrigere Priorisierung als für die Downloaddaten 110 kann beispielsweise für Videodaten 112 vorgesehen sein. In Abhängigkeit von der Priorisierung und den Kanalqualitäts-Kenngrößen 102 - 106 kontrolliert der Server 100 die Anwendungen, die auf dem Server und/oder den Netzwerkgeräten im Kommunikationsnetzwerk ausgeführt werden.

Die Anwendungsdaten können beispielsweise Videodaten mit einer ersten Datenrate 114, Videodaten mit einer zweiten Datenrate 116, Downloaddaten mit einer ersten Datenrate 118, Downloaddaten mit einer zweiten Datenrate 120, Automatisierungsdaten mit einer ersten Datenrate 122, Automatisierungsdaten mit einer zweiten Datenrate 124 und/oder sicherheitsgerichtete Daten 126 sein.

Falls nun die maximale Kanalqualität nicht ausreicht, kann der Server beispielsweise die Übertragung der Videodaten mit der ersten Datenrate 114 beenden und anstatt dessen die Videodaten mit der zweiten Datenrate 116 starten. Das gleiche kann mit den Downloaddaten 118 und 120 geschehen. Damit eine Übertragung der sicherheitsgerichtete Daten 126 gewährleistet bleibt, kann auch die Übertragung der Videodaten 114 und/oder 116 beendet werden.

Über einen Indikator 128 gibt der Server 100 über Anzeigemittel einen Qualitätsparameter des Kommunikationsnetzwerks aus. Der Indikator 128 zeigt an, wie stark die maximale Kanalqualität des drahtlosen Kommunikationskanals ausgenutzt wird. Bei einer hohen Ausnutzung der maximalen Kanalqualität wird dies also dem Benutzer angezeigt. Der Benutzer kann dann auch manuell einzelne Datenraten reduzieren und/oder einzelne Anwendungen beenden.

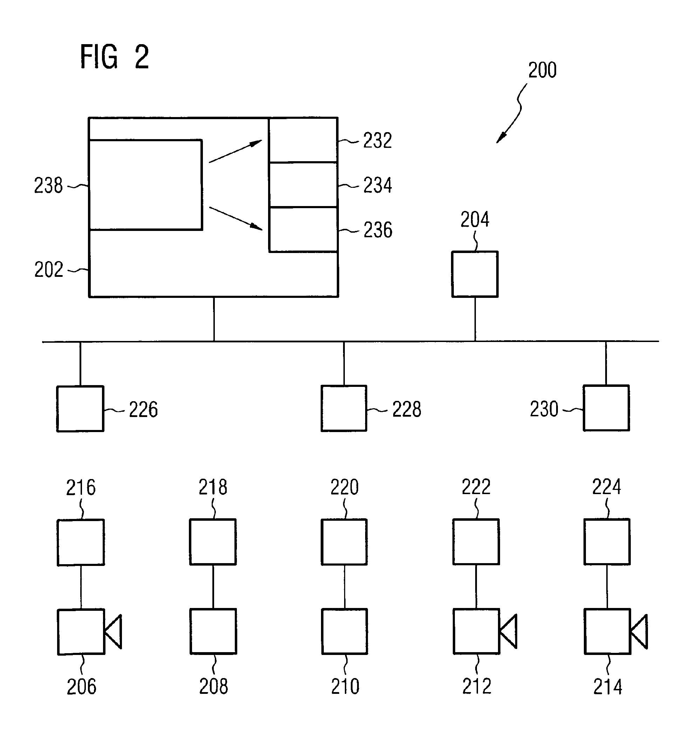

Figur 2 ist eine schematische Ansicht eines Kommunikationsnetzwerks 200 mit einem Server 202, einer Automatisierungseinrichtung 204, mehreren Netzwerkgeräten 206, 208, 210, 212, 214, die auch bewegt sein können und jeweils über einen dazugehörigen Netzwerk-Client 216, 218, 220, 222, 224 drahtlos mit Zugangspunkten 226, 228, 230 am drahtgebundenen Teil des Kommunikationsnetzwerks kommunizieren können. Der Server 202 ist mit den Zugangspunkten 226 - 230 über Netzwerkkabel verbunden. Außerdem umfasst das drahtgebundene Netzwerk eine Automatisierungseinrichtung 204. Die Daten werden vom Server an die Zugangspunkte 226 - 230 gesendet. Die Zugangspunkte 226 - 230 leiten die Daten drahtlos an die Netzwerk-Clients 218 - 224 weiter. Die Netzwerk-Clients 218 - 224 leiten die Daten an das jeweils dazugehörige Netzwerkgerät 206 - 214 weiter.

Beispielsweise werden Daten, die vom Server 202 an das Netzwerkgerät 206 gesendet werden sollen, über den Zugangspunkt 226 an den Client 216 gesendet. Der Client 216 leitet die Daten an das Netzwerkgerät 206 weiter. Die Netzwerkgeräte 206 - 214 können zum Beispiel Videoanwendungen ausführen. Dies ist bei Netzwerkgeräten 206, 212 und 214 der Fall. Die Netzwerkgeräte 208 und 210 übertragen beispielsweise Automatisierungsdaten, die auch sicherheitsgerichtet sein können. Auch im Falle der Automatisierungsdaten werden die Daten vom Server zunächst über einen Zugangspunkt an den Client 218 oder 220 geschickt. Client 218 oder 220 leitet die Daten an das zugehörige Netzwerkgerät 208 bzw. 210 weiter.

Wenn nun die Netzwerkgeräte 206 - 214 Daten an den Server senden wollen, leiten die Netzwerkgeräte 206 - 214 diese Daten an den dazugehörigen Client 216 - 224 weiter. Der jeweilige Client übermittelt die Daten drahtlos an einen Zugangspunkt 226 - 230. Die Daten können dann an den Server 202 weitergeleitet werden. Diese Weiterleitung geschieht im drahtgebundenen Teil des Kommunikationsnetzwerks. Die Automatisierungseinrichtungen 208 und 210 können beispielsweise auch Daten an die Automatisierungseinrichtung 204 über die Zugangspunkte 226-230 und die Clients 216-224 senden. Ebenso können die Automatisierungseinrichtungen 208 und 210 Daten von der Automatisierungseinrichtung 204 über die Zugangspunkte 226-230 und die Clients 216-224 empfangen.

Der Server 202 steuert alle diese Datenübertragungen durch die Ausführung mehrerer Anwendungen 232, 234 und 236. Beispielsweise ist Anwendung 232 für die Übertragung von Videodaten von Netzwerkgerät 212 zum Server 202 verantwortlich. Außerdem überwacht der Server 202 die Kanalqualitäts-Kenngrößen 238. Anhand der Kanalqualitäts-Kenngrößen 238 wird die maximale Kanalgüte des drahtlosen Kommunikationskanals ermittelt. Wenn die maximale Kanalqualität nicht für alle drahtlosen Datenübertragungen der Netzwerkgeräte 206 - 214 und des Servers 202 ausreicht, verringert der Server die Datenrate zumindest einer der Anwendungen 232 - 236. Beispielsweise kann die Datenrate der Datenübertragung der Anwendungsdaten von Anwendung 232 herabgesetzt werden, da es sich hier um Videodaten handelt, die nicht sicherheitsgerichtet sind. Der Server 202 kann auch eine der Anwendungen 232 - 236 beenden, wenn dies aufgrund der Priorisierung der Anwendungen 232 - 236 notwendig ist, um die sicherheitsgerichteten Daten nicht zu beeinträchtigen. Beispielsweise ist Anwendung 236 für die Übertragung von sicherheitsgerichteten Daten von dem Netzwerkgerät 210 zur Automatisierungseinrichtung 204 verantwortlich. In diesem Fall wird die Datenrate der Anwendung 236 nicht herabgesetzt und eine Beendigung der Anwendung 236 erfolgt nicht. Vorzugsweise werden eher die Datenraten der Anwendungen 232 und 234 verringert oder die Anwendung 232 und 234 beendet.

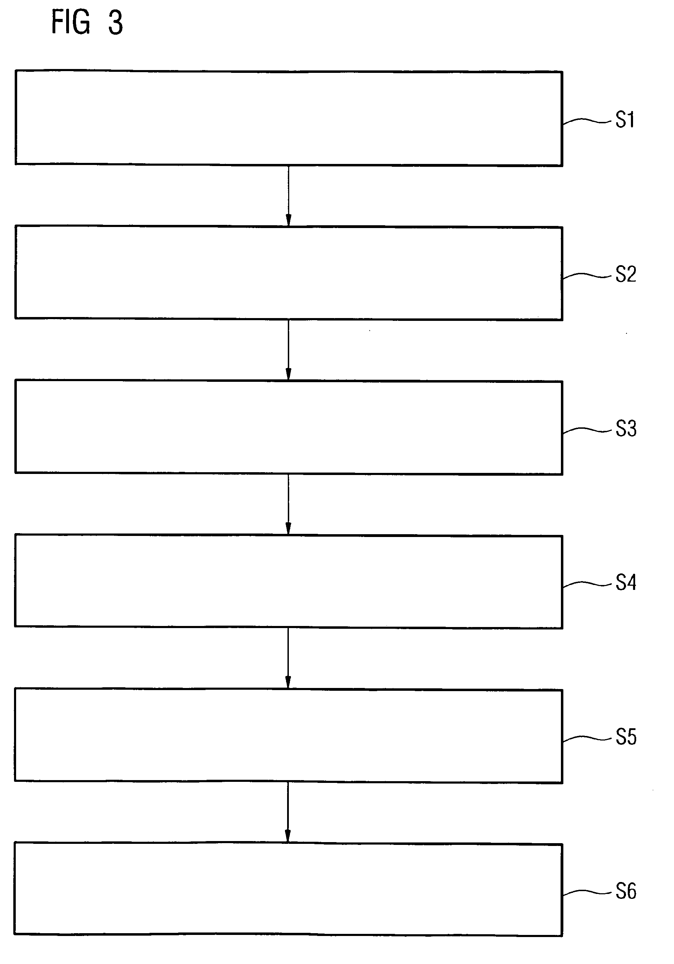

Figur 3 ist ein Flussdiagramm eines Verfahrens nach Ausführungsformen der Erfindung. In Schritt S1 werden mehrere Anwendungen auf dem Server mit den Netzwerkgeräten ausgeführt. Hierfür werden in Schritt 2 Anwendungsdaten über das Kommunikationsnetzwerk zwischen dem Server und den Netzwerkgeräten und/oder zwischen den Netzwerkgeräten untereinander ausgetauscht. Die Anwendungsdaten umfassen zumindest erste Daten einer ersten Anwendung und zweite Daten einer zweiten Anwendung. Die Übertragung der ersten Daten über den drahtlosen Kommunikationskanal erfolgt mit einer ersten Datenrate und die Übertragung der zweiten Daten über den drahtlosen Kommunikationskanal erfolgt mit einer zweiten Datenrate. Die maximale Kanalgüte des drahtlosen Kommunikationskanals wird mit Hilfe von Kanalqualitäts-Kenngrößen in Schritt S3 ermittelt. Die Kanalqualitäts-Kenngrößen können zum Beispiel CRC-Fehler, Frame-Wiederholungen, Modulationsarten und/oder Datenraten sein.

In Schritt S4 wird die Art der ersten und zweiten Daten mit Hilfe von Anwendungs-Kenngrößen der ersten und zweiten Anwendung ermittelt. Die Anwendungs-Kenngrößen werden beispielsweise bei der Planung des Kommunikationsnetzwerks für jede Anwendung definiert. Beispielsweise wird für eine Videoanwendung definiert, dass es sich um Videodaten handelt. Bei einer Automatisierungseinrichtung wird definiert, dass es sich um Automatisierungsdaten handelt, die eventuell auch sicherheitsgerichtet sein können.

In Schritt S5 werden die erste und/oder die zweite Datenrate in Abhängigkeit von der maximalen Kanalgüte und von der Art der ersten und zweiten Daten angepasst. Die Anpassung erfolgt so, dass möglichst keine sicherheitsgerichteten Daten nicht oder langsamer übertragen werden. Zunächst werden nichtsicherheitsgerichteten Anwendungen wie Videoanwendungen oder Downloadanwendungen verlangsamt oder beendet.

In Schritt S7 kann optional die Beendigung der ersten Anwendung in Abhängigkeit von der maximalen Kanalgüte und von der Art der ersten und zweiten Daten erfolgen.

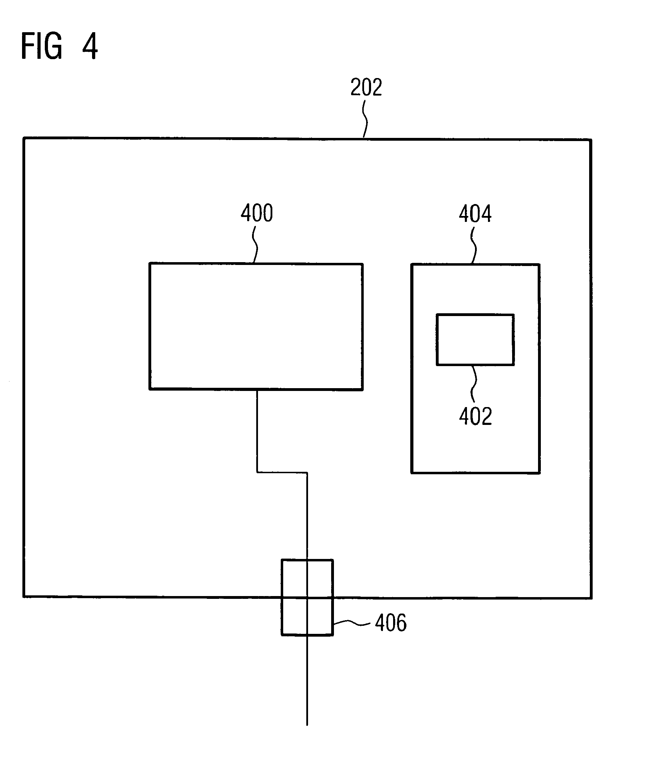

Figur 4 ist ein Blockdiagramm eines Servers nach Ausführungsformen der Erfindung. Der Server umfasst einen Prozessor 400, der zur Ausführung eines Programms 402 mit Instruktionen ausgebildet ist. Das Programm 402 ist im Datenspeicher 404 gespeichert. Der Server ist außerdem dazu ausgebildet, dass er über eine Schnittstelle 406 mit einem drahtgebundenen Teil eines Kommunikationsnetzwerks kommunizieren kann.

Bei Ausführungen des Programms 402 wird der Server dazu veranlasst, Anwendungsdaten, die über das Kommunikationsnetzwerk ausgetauscht werden, zu priorisieren. Dies geschieht, indem der Prozessor 400 die Instruktionen des Programms 402 ausführt. Der Prozessor 400 bestimmt außerdem eine erste Datenrate für die Übertragung von ersten Daten über einen drahtlosen Kommunikationskanal. Außerdem bestimmt der Prozessor 400 eine zweite Datenrate für die Übertragung von zweiten Daten über den drahtlosen Kommunikationskanal.

Der Prozessor 400 ist außerdem dazu ausgebildet, die maximale Kanalgüte des drahtlosen Kommunikationskanals auf Grundlage von Kanalqualitäts-Kenngrößen zu ermitteln. Die Kanalqualitäts-Kenngrößen kann der Server 202 ebenfalls über die Schnittstelle 406 empfangen und im Prozessor 400 durch Ausführung des Programms 402 wird die maximale Kanalgüte ermittelt.

Aufgrund von Anwendungs-Kenngrößen ermittelt der Prozessor 400 die Art der ersten und zweiten Daten. Die Anwendungs-Kenngrößen können für jede ausführbare Anwendung des Prozessors 400 ebenfalls im Speicher 404 gespeichert sein.

Der Prozessor 400 passt die erste und/oder die zweite Datenrate in Abhängigkeit von der maximalen Kanalgüte und von der Art der ersten und zweiten Daten an. Außerdem ist der Prozessor 400 dazu ausgebildet, eine erste Anwendung in Abhängigkeit von der maximalen Kanalgüte und der ersten und zweiten Daten zu beenden.

### Bezugszeichenliste

- 100: Server
- 102: CRC-Fehler
- 104: Frame-Wiederholungen
- 106: Modulationsart und Datenrate
- 108: Automatisierungsdaten
- 110: Downloaddaten
- 112: Videodaten
- 114: Videodaten mit erster Datenrate
- 116: Videodaten mit zweiter Datenrate
- 118: Downloaddaten mit erster Datenrate
- 120: Downloaddaten mit zweiter Datenrate
- 122: Automatisierungsdaten mit erster Datenrate
- 124: Automatisierungsdaten mit zweiter Datenrate
- 126: sicherheitsgerichtete Daten
- 128: Indikator
- 200: Kommunikationsnetzwerk
- 202: Server
- 204: Automatisierungseinrichtung
- 206: Netzwerkgerät
- 208: Netzwerkgerät
- 210: Netzwerkgerät
- 212: Netzwerkgerät
- 214: Netzwerkgerät
- 216: Netzwerk-Client
- 218: Netzwerk-Client
- 220: Netzwerk-Client
- 222: Netzwerk-Client
- 224: Netzwerk-Client
- 226: Zugangspunkt
- 228: Zugangspunkt
- 230: Zugangspunkt
- 232: Anwendung
- 234: Anwendung
- 236: Anwendung
- 238: Kanalqualitäts-Kenngrößen
- 400: Prozessor
- 402: Programm
- 404: Speicher
- 406: Schnittstelle

## Patentansprüche

1. Verfahren zur Kommunikation in einem Kommunikationsnetzwerk (200),
wobei die Kommunikation im Kommunikationsnetzwerk zumindest teilweise drahtlos über einen drahtlosen Kommunikationskanal erfolgt,
wobei der drahtlose Kommunikationskanal eine maximale Kanalgüte aufweist,
wobei das Kommunikationsnetzwerk zumindest einen Server (100; 202) und mehrere Netzwerkgeräte (206; 208; 210; 212; 214) umfasst,
wobei das Verfahren die folgenden Schritte umfasst:
- Ausführung (S1) mehrerer Anwendungen (114; 116; 118; 120; 122; 124; 126) auf dem Server und den Netzwerkgeräten,
- Übertragung (S2) von Anwendungsdaten über das Kommunikationsnetzwerk zwischen dem Server und den Netzwerkgeräten und/oder zwischen den Netzwerkgeräten untereinander, wobei die Anwendungsdaten zumindest erste Daten einer ersten Anwendung und zweite Daten einer zweiten Anwendung umfassen, wobei für die Übertragung der ersten Daten über den drahtlosen Kommunikationskanal eine erste Datenrate und für die Übertragung der zweiten Daten über den drahtlosen Kommunikationskanal eine zweite Datenrate verwendet wird,
- Ermittlung (S3) der maximalen Kanalgüte des drahtlosen Kommunikationskanals insbesondere mit Hilfe von Kanalqualitätskenngrößen,
- Ermittlung (S4) der Art der ersten und zweiten Daten insbesondere mit Hilfe von Anwendungskenngrößen (108; 110; 112) der ersten und der zweiten Anwendung,
- Anpassung (S5) der ersten und/oder der zweiten Datenrate in Abhängigkeit von der maximalen Kanalgüte und von der Art der ersten und zweiten Daten, und/oder
- Beendigung (S6) der ersten Anwendung und/oder der zweiten Anwendung in Abhängigkeit von der maximalen Kanalgüte und von der Art der ersten und zweiten Daten.

2. Verfahren nach Anspruch 1, wobei es sich bei den ersten und/oder zweiten Daten um eine der folgenden Datenarten handelt: Echtzeitdaten, Programminstallationsdaten, Dokumentdaten, Videodaten, Sprachdaten oder sicherheitsgerichtete Daten.

3. Verfahren nach einem der vorhergehenden Ansprüche, wobei die ersten Daten Echtzeitdaten mit einer ersten Datenrate sind, und wobei bei einer Beendigung der ersten Anwendung eine dritte Anwendung gestartet wird, wobei die dritte Anwendung dritte Daten über den drahtlosen Kommunikationskanal überträgt, und wobei die dritten Daten Echtzeitdaten mit einer zweiten Datenrate sind.

4. Verfahren nach einem der vorhergehenden Ansprüche, wobei die zweiten Daten sicherheitsgerichtete Daten sind, wobei die Übertragung der zweiten Daten eine Mindestdatenrate benötigt, und wobei der Server verhindert, dass die zweite Datenrate kleiner als die Mindestdatenrate wird.

5. Verfahren nach einem der vorhergehenden Ansprüche, wobei die Kanalqualitätskenngrößen zumindest eine der folgenden Größen umfassen: Anzahl von CRC-Fehlern, Anzahl von Frame Wiederholungen, Modulationsart, Datenrate.

6. Verfahren nach einem der vorhergehenden Ansprüche, wobei der Server Anzeigemittel umfasst, wobei der Server über die Anzeigemittel einen Indikator für die Ausnutzung der maximalen Kanalgüte des drahtlosen Kommunikationskanals ausgibt.

7. Verfahren nach Anspruch 6, wobei der Indikator in Abhängigkeit von der Ausnutzung der maximalen Kanalgüte in unterschiedlichen Farben dargestellt wird.

8. Server (202) für ein Kommunikationsnetzwerk (200), wobei der Server dazu ausgebildet ist, mehrere Anwendungen zu priorisieren,
wobei der Server Mittel (400; 402) für die Priorisierung von Anwendungsdaten über das Kommunikationsnetzwerk umfasst,
wobei die Anwendungsdaten zumindest erste Daten einer ersten Anwendung und zweite Daten einer zweiten Anwendung umfassen,
wobei der Server Mittel (400; 402) zur Bestimmung einer ersten Datenrate für die Übertragung der ersten Daten über einen drahtlosen Kommunikationskanal und zur Bestimmung einer zweiten Datenrate für die Übertragung der zweiten Daten über den drahtlosen Kommunikationskanal umfasst,
wobei der Server Mittel (400; 402) zur Ermitttlung der maximalen Kanalgüte des drahtlosen Kommunikationskanals insbesondere auf Grundlage von Kanalqualitätskenngrößen umfasst,
wobei der Server Mittel (400; 402) zur Ermitttlung der Art der ersten und der zweiten Daten insbesondere auf Grundlage von Anwendungskenngrößen der ersten und der zweiten Anwendung umfasst,
wobei der Server Mittel (400; 402) zur Anpassung der ersten und/oder der zweiten Datenrate in Abhängigkeit von der maximalen Kanalgüte und von der Art der ersten und zweiten Daten umfasst, und/oder
wobei der Server Mittel (400; 402) zur Beendigung der ersten Anwendung und/oder der zweiten Anwendung in Abhängigkeit von der maximalen Kanalgüte und von der Art der ersten und zweiten Daten umfasst.

9. Server nach Anspruch 8, wobei der Server zur Durchführung eines Verfahrens gemäß einem der Ansprüche 1 bis 7 ausgebildet ist.

10. Computerlesbares Speichermedium (404) mit Instruktionen (402), die bei Ausführung in einem Server (202) nach einem der Ansprüche 8 oder 9 in einem Kommunikationsnetzwerk (200) den Server zur Ausführung des folgenden Verfahrens veranlassen:
- Übertragung von Anwendungsdaten für die Ausführung der Anwendungen über das Kommunikationsnetzwerk, wobei die Anwendungsdaten zumindest erste Daten einer ersten Anwendung und zweite Daten einer zweiten Anwendung umfassen,
- Bestimmung einer ersten Datenrate für die Übertragung der ersten Daten über einen drahtlosen Kommunikationskanal und Bestimmung einer zweiten Datenrate für die Übertragung der zweiten Daten über den drahtlosen Kommunikationskanal,
- Ermittlung der maximalen Kanalgüte des drahtlosen Kommunikationskanals insbesondere auf Grundlage von Kanalqualitätskenngrößen,
- Ermittlung der Art der ersten und der zweiten Daten insbesondere auf Grundlage von Anwendungskenngrößen der ersten und der zweiten Anwendung,
- Anpassung der ersten und/oder der zweiten Datenrate in Abhängigkeit von der maximalen Kanalgüte und von der Art der ersten und zweiten Daten, und/oder
- Beendigung der ersten Anwendung und/oder der zweiten Anwendung in Abhängigkeit von der maximalen Kanalgüte und von der Art der ersten und zweiten Daten.

11. Computerlesbares Speichermedium nach Anspruch 10, wobei das computerlesbare Speichermedium zur Durchführung eines Verfahrens gemäß einem der Ansprüche 1 bis 7 ausgebildet ist

12. Kommunikationsnetzwerk (200) mit einem Server nach einem der Ansprüche 8 oder 9.

13. Kommunikationsnetzwerk nach Anspruch 12, wobei das Kommunikationsnetzwerk zur Durchführung eines Verfahrens gemäß einem der Ansprüche 1 bis 7 ausgebildet ist.
